# EUROPÄISCHE PATENTSCHRIFT

(11) **EP 0 381 847 B1**
(45) Veröffentlichungstag und Bekanntmachung des Hinweises auf die Patenterteilung: **09.03.1994**
(21) Anmeldenummer: 89123608.5
(22) Anmeldetag: 21.12.1989
(51) Int. Cl.: B28B 1/52

(54) **Verfahren zur Herstellung von Gipsfaserplatten**
Process for making fibre-reinforced plaster boards
Procédé pour la fabrication de plaques de plâtre contenant des fibres

(30) Priorität: 08.02.1989 DE 3903641
(43) Veröffentlichungstag der Anmeldung: 16.08.1990
(73) Patentinhaber: ProMineral Gesellschaft zur Verwendung von Mineralstoffen mbH, 45141 Essen (DE)
(72) Erfinder: Exner, Günter, Dipl.-Ing., D-8716 Dettelbach (DE)
(74) Vertreter: Sparing - Röhl - Henseler Patentanwälte

(56) Entgegenhaltungen:
- DE-A- 3 149 804
- FR-A- 787 728
- FR-A- 1 369 302
- FR-A- 2 192 984
- FR-A- 2 307 930
- FR-A- 2 439 654
- GB-A- 1 536 663
- GB-A- 1 603 625
- US-A- 1 993 047
- US-A- 4 053 268

## Beschreibung

Die Erfindung betrifft ein Verfahren zur Herstellung von Gipsfaserplatten, insbesondere Doppelbodenplatten, bei dem eine mit hohem Wasserüberschuß versehene Gipsfasermischung mittels einer Einzeltaktpresse, deren Unterform mit Entwässerungskanälen versehen ist, in einem Arbeitsgang geformt, entwässert, verdichtet und entlüftet wird.

Ein derartiges Verfahren ist aus der US-A-2 239 860 bekannt, gemäß dem Gipskartonplatten hergestellt werden, indem in einer Einzeltaktpresse, die einerseits einen Lochboden und andererseits einen Stempel aufweist, der Karton und dazwischen eine Gipsfasermischung angeordnet wird. Der Stempel drückt hierbei im wesentlichen den Teil des Wassers, der nicht vom Karton aufgenommen wird, nach unten aus. Dies ist nur für relativ dünne Platten geeignet, da die Wasserausdrückbarkeit durch den Karton beschränkt wird, wobei der Karton andererseits ein Austreten von Gips zusammen mit ausgepreßtem Wasser verhindert. Eine Herstellung von außenseitig unbeschichteten Gipsfaserplatten ist hiermit ohne Probleme in bezug auf Dicke, Entformen und Zusetzen des Lochbodens nicht möglich.

Ein weiteres bekanntes Verfahren zur Herstellung von Gipsfaserplatten besteht darin, daß die Gipsfasermischung mit Wasserüberschuß auf ein laufendes Filzband aufgeschwemmt wird, worauf das so gebildete Faservlies auf eine Formatwalze aufgewickelt und von dieser abschnittsweise entfernt wird (Langfilzverfahren).

Ferner ist ein Verfahren bekannt, bei welchem die Gipsfasermischung in relativ trockenem Zustand auf ein laufendes Band aufgestreut wird, wobei hier der Wasserüberschuß so gering gehalten werden muß, daß eine Streuung möglich ist. Hierbei ist es bekannt, nach dem Aufstreuen auf das Band die so erzeugten (formierten) Rohplatten in Pressen zu verdichten.

Bekannt ist es weiter, Gipsfaserplatten aus einer Mischung mit hohem Wasserüberschuß durch Eingießen in Formen und nachfolgendes Abbinden an der Luft herzustellen.

Nachteilig bei allen diesen bekannten Verfahren ist es also, daß damit dickere Gipsfaserplatten (etwa ab 20 mm aufwärts) nicht oder nicht mit ausreichenden Festigkeitswerten und damit auch nicht wirtschaftlich herstellbar sind. Dies gilt insbesondere für Platten, die nach dem Gießverfahren hergestellt sind. Die Herstellung dickerer Platten nach dem Langfilverfahren ist nicht möglich, weil sich das Faservlies nicht mit ausreichender Stärke auf die Formatwalze aufwickeln läßt.

Bei dem Streuverfahren, bei weichem die Mischung auf ein Filzband aufgestreut und anschließend verpreßt wird, lassen sich die notwendigen Festigkeitswerte ebenfalls nicht erreichen, weil die Mischung, um streufähig zu sein, in relativ trockenem Zustand (erdfeucht) aufgebracht werden muß.

Der Erfindung liegt demgemäß die Aufgabe zugrunde, ein Verfahren der eingangs genannten Art so auszubilden, daß sich damit relativ dicke Gipsfaserplatten mit ausreichenden Festigkeitseigenschaften wirtschaftlich erzeugen lassen.

Diese Aufgabe wird erfindungsgemäß dadurch gelöst, daß eine Einzeltaktpresse verwendet wird, bei der auch die Oberform mit Entwässerungskanälen versehen ist und die Ober- und Unterform mit einem Entwässerungsgeweße abgedeckt sind, und daß die Entwässerungsgewebe zwischen den einzelnen Preißtakten vor Einbringung der Gispfasermischung mit einem Abbindeverzögerer besprüht werden, wobei für die Gipsfasermischung ein Gips Verwendung findet, der eine Entwässerungsphase von wenigstens 10 min ermöglicht.

Mit diesem Verfahren wird erreicht, daß auch relativ dicke Gipsfaserplatten ohne weiteres hinreichend entwässert werden, weil einerseits durch die Abfuhr des Überschußwassers auch nach oben die Entwässerungszeit verkürzt wird und weil andererseits ein Gips Verwendung findet, der eine ausreichende Entwässerungsphase ermöglicht.

Mit dem erfindungsgemäßen Verfahren lassen sich daher auch dicke Platten gleichzeitig pressen und entwässern, weil für eine rasche Abfuhr des Überschußwassers Sorge getragen ist und weil genügend Zeit für die Entwässerung zur Verfügung steht.

Außerdem stellt ein relativ grobkörniger Gips ein vergleichsweise grobes Filter dar, welches es ermöglicht, daß das Wasser rasch nach oben und unten austreten kann. Dies ist besonders bei relativ dicken Platten über 20 mm von Bedeutung. Wird Gips verwendet, dessen kristalline Struktur feiner ist, so besteht die Gefahr, daß das Wasser in der Platte beim Preßvorgang verbleibt, weil sich verdichtete Außenschichten aus Gips bilden, die mehr oder weniger wasserundurchlässig sind.

Durch die erfindungsgemäße Verwendung des vergleichsweise grobkörnigen Gipses werden diese Probleme beseitigt, da dieser beim Verpreßvorgang sich sowohl nach oben als auch nach unten ohne Bildung wasserundurchlässiger Schichten entwässern läßt.

Besonders vorteilhaft ist hierbei, wenn es sich beim verwendeten Gips um sogenannten α -Gips handelt, weil dieser eine vergleichsweise lange Entwässerungsphase zuläßt.

α -Gips besteht aus Monokristallen, die als reine Kristalle anzusehen sind. Ein solcher α -Gips ist schwerer löslich als der sogenannte β -Gips, bei dem es sich zwar dem Augenschein nach um gröbere Körner handelt, die aber nicht monokristallin sind, sondern einen kristallinen Kern haben, der an seinem Umfang mit Kleinkristallen besetzt ist. Beim β -Gips handelt es sich also um eine Zusammenfügung eines Kernkristalls mit Kleinkristallen. Diese Zusammenfügung kann jeweils insgesamt größer sein als die Kristalle des α -Gipses, wobei ein solcher β -Gips schneller hydratisierbar als α -Gips ist.

Dies bedeutet, daß beim β -Gips bis zur gänzlichen Hydratisierung nur etwa fünf Minuten vergehen; worauf die Entwässerung stark verlangsamt wird, weil die Kristalle aneinander wachsen. Danach kann die Entwässerung kaum oder nur mit Mühe fortgesetzt werden, so daß ein wirtschaftliches Pressen der erfindungsgemäß vorgesehenen relativ dicken Gipsplatten bei Verwendung eines β -Gipses nicht möglich ist.

Im Gegensatz dazu können beim α -Gips bis zur vollständigen Hydratisierung etwa 20 Minuten vergehen, so daß die erfindungsgemäß notwendigen zehn Minuten für das Herauspressen des Überschußwassers aus stärkeren Platten zur Verfügung stehen.

Ein β -Gips kann aber auch durch das sogenannte Aridisierverfahren in einen Status gebracht werden, in welchem er sich in der erforderlichen Weise verhält, in dem er also eine Entwässerungsphase von wenigstens zehn Minuten möglich macht. Die Aridisierung besteht in einer besonderen Lagerung usw. zur Verbesserung der Eigenschaften gebrannter Gipse.

Das gleichzeitige Pressen und Entwässern ist möglich, obwohl die Maschen des Entwässerungsgewebes in der Regel größer als der Korndurchmesser des Gipses sind. Die Fasern der Gipsfasermischung bilden nämlich ein Entwässerungsvlies, das durch die Maschen des Entwässerungsgewebes nicht durchtreten kann.

Bei den Fasern, die mithin eine Filterwirkung entwickeln, indem sie den Gips zurückhalten und das Wasser austreten lassen, kann es sich um Papier- oder Zellstoffasern handeln, wobei es möglich ist, zerkleinertes Altpapier zu verwenden.

Der Anteil dieser Papier- oder Zellstoffasern (Filterfasern) kann sehr gering sein, wobei Versuche ergeben haben, daß bereits ein Anteil von 0,75 Gew.-% bezogen auf die Trockenmischung dieser Filterfasern ausreicht, um die oben beschriebene Wirkung herbeizuführen. Selbstverständlich sind größere Anteile dieser Filterfasern von bis zu 6 Gew.-% bezogen auf die Trockenmischung möglich.

Werden ausschließlich Zellstoffasern verwendet, so sind noch höhere Anteile in der Mischung von bis zu 16 Gew.-% bezogen auf die Trockenmischung möglich. Im letzteren Fall können die Papier- oder Zellstoffasern mit einem Anteil von bis zu 10 Gew.-% bezogen auf die Trockenmischung auch als Armierungsfasern dienen bzw. diese ersetzen. Die Einbringung weiterer Armierungsfasern kann in diesem Fall nicht erforderlich sein. Im Regelfall werden jedoch als (weitere) Armierungsfasern Glasfasern, künstliche und natürliche Mineralfasern und/oder Kunststoffasern oder dergleichen in die Mischung eingebracht.

Der Wasserüberschuß in der erfindungsgemäß für die Herstellung der Gipsfaserplatte vorgesehenen Gips-Faser-Wasser-Mischung kann unterschiedlich groß sein. So ist es möglich, einen Anteil von 70 Gew.-% Wasser bei 30 Gew.-% Feststoff zu verwenden. Im Regelfall wird die Mischung 40 bis 45 Gew.-% Wasser und demzufolge 55 bis 60 Gew.-% Feststoffanteile aufweisen.

Um das Zusetzen des Gewebes zu verhindern, das insbesondere dann auftritt, wenn der Abbindevorgang einsetzt, ist erfindungsgemäß weiter vorgesehen, den Abbindeverzögerer nicht der Gips-Faser-Wasser-Mischung, sondern gesondert durch wenigstens ein Sprührohr zuzusetzen, das auf das Entwässerungsgewebe gerichtet ist, wobei der Verzögerer bei offener Presse zwischen den einzelnen Preßtakten vor Einbringung der Gips-Faser-Wasser-Mischung auf das Entwässerungsgewebe aufgebracht wird. Damit wird erreicht, daß sich der Verzögerer mit dem aufgepreßten Wasser verbindet, so daß dieses mit dem Verzögerer angereichert wird. Dies hat den Vorteil, daß mit dem Verzögerer angereichertes Wasser durch die Entwässerungskanäle der Formen geführt wird und dort, und nicht nur im Entwässerungsgewebe, das Zusetzen verhindert.

Dies schafft außerdem die Möglichkeit, das auf diese Weise mit dem Abbindeverzögerer angereicherte Wasser zum Ansetzen einer neuen Gips-Faser-Wasser-Mischung zu verwenden, so daß auch insoweit ein vorzeitiger Abbindeprozeß verhindert wird.

Bei einer Presse zur Durchführung des erfindungsgemäßen Verfahrens ist zweckmäßigerweise unterhalb des Entwässerungsgewebes, also zwischen diesem und der Oberfläche der zugehörigen Form ein Sieb aus Drahtgeflecht angeordnet, welches das Entwässerungsgewebe abstützt und ein Eindrücken in die Entwässerungskanäle der Formen verhindert.

Besonders vorteilhaft ist es, wenn die Entwässerung nach oben durch eine Absaugvorrichtung unterstützt wird, mit welcher gleichzeitig die Oberform entlüftet wird.

Zusätzlich kann in gleicher Weise die Unterform durch eine Absaugvorrichtung beaufschlagt werden, falls dies sich als notwendig erweisen sollte.

Die mit dem erfindungsgemäßen Verfahren hergestellte Gipsfaserplatte ist in besonders vorteilhafter Weise als Doppelbodenplatte einsetzbar, wobei Doppelbodenplatten dazu dienen, Kabelräume und dergleichen gegenüber dem eigentlichen Nutzraum abzugrenzen. Bekannte Doppelbodenplatten sind meist Spanplatten, die den erheblichen Nachteil haben, daß sie brennbar sind. Außerdem sind sie elastisch und federn bei einer Trittbelastung. Diese Mängel weist die erfindungsgemäß hergestellte Gipsfaserplatte nicht auf.

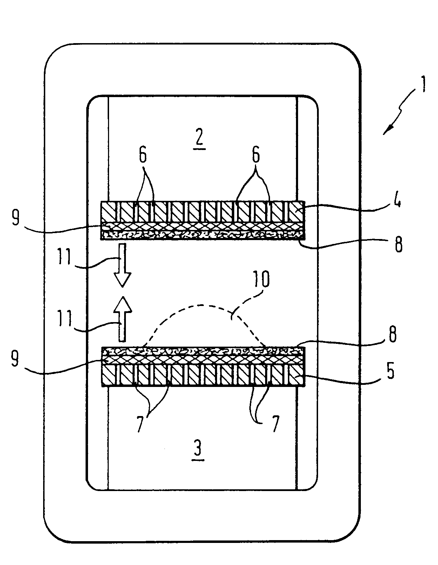

Die Erfindung wird im folgenden anhand einer schematischen Darstellung einer Vorrichtung zur Durchführung des erfindungsgemäßen Verfahrens in der Zeichnung näher erläutert.

Die Figur zeigt in schematischer Darstellung eine Einzeltaktpresse 1, deren Oberbär 2 und Unterbär 3 jeweils mit eine Form 4 bzw. 5 versehen ist, wobei die Formen 4 und 5 gegen die Forminnenseite gerichtete Entwässerungskanäle 6 und 7 haben. Diese Entwässerungskanäle 6 und 7 sind mit einem Entwässerungsgewebe 8 abgedeckt, wobei sich zwischen der nach innen gewandten Oberfläche der Formen 4 und 5 und dem Entwässerungsgewebe 8 ein Drahtgeflecht 9 befindet, welches ein Eindrücken des Entwässerungsgewebes 8 in die nach innen weisenden Öffnungen der Kanäle 6 und 7 verhindert.

Bei der Herstellung der Gipsfaserplatten wird die Gips-Faser-Wasser-Mischung wie bei 10 angedeutet, auf die Oberfläche des Entwässerungsgewebes 8 der unteren Form aufgebracht und anschließend werden die beiden Formen 4 und 5 in Richtung der Pfeile 11 gegeneinander bewegt. Hierbei wird die mit hohem Wasserüberschuß angemachte Gipsfasermischung 10 über die Fläche der Formen 4 und 5 gleichmäßig verteilt, formiert, entwässert und verdichtet und nach einem Öffnen der Presse entlüftet. Die Gipsfaserplatte wird mithin in einem einzigen Arbeitsgang hergestellt, wobei sich auf diese Weise Gipsfaserplatten erzeugen lassen, die dicker als 20 mm sind. Die Preßdrücke betragen hierbei im Mittel etwa 50 kp/cm².

Die Oberform 4 und die Unterform 5 können jeweils mit einer nicht dargestellten Absaugvorrichtung beaufschlagt sein, mit welcher gleichzeitig die Formen entlüftet werden.

## Patentansprüche

1. Verfahren zur Herstellung von Gipsfaserplatten, insbesondere Doppelbodenplatten, bei dem eine mit hohem Wasserüberschuß versehene Gipsfasermischung mittels einer Einzeltaktpresse, deren Unterform mit Entwässerungskanälen versehen ist, in einem Arbeitsgang geformt, entwässert, verdichtet und entlüftet wird, dadurch **gekennzeichnet,** daß eine Einzeltaktpresse verwendet wird, bei der auch die Oberform mit Entwässerungskanälen versehen ist und die Ober- und Unterform mit einem Entwässerungsgewebe abgedeckt sind, und daß die Entwässerungsgewebe zwischen den einzelnen Preßtakten vor Einbringung der Gispfasermischung mit einem Abbindeverzögerer besprüht werden, wobei für die Gipsfasermischung ein Gips Verwendung findet, der eine Entwässerungsphase von wenigstens 10 min ermöglicht.

2. Verfahren nach Anspruch 1, dadurch gekennzeichnet, daß beim Preßvorgang ausgepreßtes und mit dem aufgesprühten Abbindeverzögerer angereichertes Wasser als Anmachwasser verwendet wird.

3. Verfahren nach Anspruch 1 oder 2, dadurch gekennzeichnet, daß mit einem Preßdruck von etwa 5 MN/m² gepreßt wird.

4. Verfahren nach einem der Ansprüche 1 bis 3, dadurch gekennzeichnet, daß als Fasern Papier- oder Zellstoffasern, insbesondere Fasern aus zerkleinertem Altpapier, verwendet werden.

5. Verfahren nach Anspruch 4, dadurch gekennzeichnet, daß ein Faseranteil, bezogen auf die Trockenmischung, von bis zu 16 Gew.-%, insbesondere bis zu 6 Gew.-% verwendet wird.

6. Verfahren nach Anspruch 4 oder 5, dadurch gekennzeichnet, daß zusätzlich als Armierungsfasern Glasfasern, künstliche oder natürliche Mineralfasern und/oder Kunststoffasern in die Mischung eingebracht werden.

7. Verfahren nach einem der Ansprüche 1 bis 6, dadurch gekennzeichnet, daß für die Mischung ein Wasseranteil von bis zu 70 Gew.-%, insbesondere zwischen 40 bis 45 Gew.-% verwendet wird.

## Claims

1. Process for producing fibrous gypsum panels, in particular false-floor panels, in which process, by means of a single-cycle press, the lower mould of which is provided with dewatering channels, a gypsum fibre mixture provided with a high water excess is moulded, dewatered, compacted and deaerated in one operation, characterized in that a single-cycle press is used in which the upper mould is also provided with dewatering channels and the upper and lower moulds are covered by a dewatering fabric, and in that, between the individual pressing cycles and before introducing the gypsum fibre mixture, the dewatering fabric is sprayed with a setting retarder, a gypsum which permits a dewatering phase of at least 10 minutes being used for the gypsum fibre mixture.

2. Process according to Claim 1, characterized in that, in the pressing operation, pressed-out water, enriched by the setting retarder which has been sprayed on, is used as mixing water.

3. Process according to Claim 1 or 2, characterized in that pressing is carried out with a moulding pressure of approximately 5 MN/m².

4. Process according to one of Claims 1 to 3, characterized in that paper or pulp fibres, in particular fibres of shredded waste paper, are used as fibres.

5. Process according to Claim 4, characterized in that, based on the dry mixture, a proportion of fibres of up to 16 % by weight, in particular up to 6 % by weight, is used.

6. Process according to Claim 4 or 5, characterized in that, in addition, glass fibres, artificial or natural mineral fibres and/or plastic fibres are introduced, as reinforcing fibres, into the mixture.

7. Process according to one of Claims 1 to 6, characterized in that a proportion of water of up to 70 % by weight, in particular between 40 and 45 % by weight, is used for the mixture.

## Revendications

1. Procédé de fabrication de plaques en staff, et plus particulièrement de plaques de faux plafond, dans lequel un mélange de staff et d'excédent d'eau important est mis en forme, drainé, comprimé et ventilé au moyen d'une presse à cycle unique dont le moule inférieur est muni de canaux de drainage, caractérisé en ce qu'on utilise une presse à cycle unique dont le moule supérieur est également muni de canaux de drainage, et en ce que le moule inférieur ainsi que le moule supérieur sont recouverts d'un tissu de drainage, ces tissus de drainage étant aspergés d'un retardateur de prise entre les cycles de pressage avant l'introduction du staff, le plâtre utilisé permettant une phase de drainage d'au moins 10 minutes.

2. Procédé selon la revendication 1, caractérisé en ce que l'eau extraite par pression et enrichie par le retardateur de prise est utilisée comme eau de préparation.

3. Procédé selon la revendication 1 ou 2, caractérisé en ce que le pressage est réalisé avec une pression d'environ 5MN/m environ.

4. Procédé selon l'une des revendications 1 à 3, caractérisé en ce qu'on utilise des fibres de papier ou de cellulose, et plus particulièrement des fibres de vieux papiers broyés.

5. Procédé selon la revendication 4, caractérisé en ce que qu'on utilise une proportion de fibres allant jusqu'à 16 % du poids du mélange sec et plus particulièrement 6 %.

6. Procédé selon la revendication 4 ou 5, caractérisé en ce que des fibres de verre, des fibres minérales naturelles et/ou des fibres de plastique ou similaire sont ajoutées au mélange comme fibres d'armature.

7. Procédé selon l'une des revendications 1 à 6, caractérisé en ce qu'une proportion d'eau allant jusqu'à 70 % du poids du mélange, mais plus particulièrement comprise entre 40 % et 45 %, est utilisée pour le mélange.
